Europäisches Patentamt

European Patent Office

Office européen des brevets

(11) Publication number: **0 257 695**
**A2**

# (12) EUROPEAN PATENT APPLICATION

(21) Application number: **87201536.7**

(22) Date of filing: **12.08.87**

(51) Int. Cl.⁴: **C07F 5/06**

---

(30) Priority: **15.08.86 US 896701**

(43) Date of publication of application:
**02.03.88 Bulletin 88/09**

(84) Designated Contracting States:
**BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Schoenthal, Galeon Wayne**
**2315 Briar Lee**
**Houston Texas 77077(US)**
Inventor: **Slaugh, Lynn Henry**
**12518 Texas Army Trail**
**Cypress Texas 77429(US)**

(74) Representative: **Aalbers, Onno et al**
**P.O. Box 302**
**NL-2501 CH The Hague(NL)**

---

(54) Process for preparing aluminoxanes.

(57) Process for preparing aluminoxanes from trialkylaluminium compounds and a water dispersion produced using a high speed, high shear-inducing impeller.

EP 0 257 695 A2

**0 257 695**

## PROCESS FOR PREPARING ALUMINOXANES

The invention relates to a process for the preparation of aluminoxanes (also referred to as "alumoxanes") which are useful in combination with transition metal compounds to prepare oligomerization and polymerization catalysts.

Aluminoxanes find use as components in polymerization and oligomerization catalysts. Aluminoxanes have been prepared by reacting a hydrocarbon solution containing a trialkylaluminium compound with hydrated crystalline salts such as $CuSO_4.5H_2O$, as described in "Mechanism of Stereochemical Control in Propylene Polymerization with Soluble Group 4B Metallocene/Methylalumoxane Catalysts", J. Am. Chem. Soc., 1984, 106 . 6355-6364, and $Al_2(SO_4)_3.9H_2O$ as described in "Zirconium Catalysts Polymerize Olefins Faster," Chem. & Eng. News, July 4, 1983, 29-30 and US patent specification 4,544,762. This technique requires guarding against the possibility of contaminating the aluminoxanes with small amounts of the crystalline salts which can act as poisons when the aluminoxanes are used in polymerization catalysts. In US patent specification 3,300,458, a method is described for preparing aluminoxanes which consists of contacting trialkylaluminium dissolved in a hydrocarbon solvent with a second hydrocarbon stream which has been saturated with water by contacting the solvent with water in a solvent saturator. In this technique, however, since the amount of water present in the hydrocarbon is small, being limited by the solubility of water in the solvent, relatively large amounts of solvent are required to prepare the aluminoxanes. Manyik et al in "A Soluble Chromium-based Catalyst for Ethylene Trimerization of Polymerization", Journal of Catalysis, 47, 197-209, (1977) also describes the use of water wetted solvent and further describes the use of the direct addition of water to a dilute solution of trialkylaluminium. However, the water addition must be done very slowly in order to prepare the aluminoxane rather than aluminium hydroxide. One method for avoiding the problems that result from the use of water-wetted solvents and direct addition of water is to use the sonification procedure disclosed in US patent application Serial No. 896,689, filed on even date.

It is an object of the present invention to permit the use of minimal amounts of solvent and to allow for a relatively rapid reaction rate to be used over a broad range of temperatures.

Accordingly, the invention provides a process for the preparation of aluminoxanes which process comprises mixing a first solution of a trialkylaluminium compound in a liquid, dry, inert, hydrocarbon solvent with a second solution of a liquid, inert, hydrocarbon solvent having water dispersed therein by using a high speed, high shear-inducing impeller wherein the trialkylaluminium compound and the water react to produce an aluminoxane.

The aluminoxanes are well-known and are polymeric aluminium compounds which can be represented by the general formula $(R-Al-O)_n$ which is a cyclic compound and $R(R-Al-O)_nAlR_2$, which is a linear compound. In the general formula, R preferably represents an alkyl group having in the range of from 1 to 5 carbon atoms such as, for example, methyl, ethyl, propyl, butyl and pentyl and n is an integer from 1 to about 20. Preference is given to methyl and ethyl groups, particularly to methyl groups. Generally, in the preparation of aluminoxanes from trialkylaluminium compounds and water, a mixture of the linear and cyclic compounds are obtained. Examples of trialylaluminium compounds which may be used in the process according to the present invention are trimethylaluminium, triethylaluminium, tri-isopropylaluminium, tri-n-propylaluminium, tri-isobutylaluminium and tri-n-pentylaluminium.

The inert solvents that can be used to dissolve the trialkylaluminium or disperse the water are well known and include, for example, saturated aliphatic compounds such as butane, pentane, hexane, heptane, octane, isoctane and purified kerosenes; cycloaliphatics such as cyclobutane, cyclopentane, cyclohexane, cycloheptane, methylcyclopentane and dimethylcyclopentane; alkenes such as butene, hexene and octene; cycloalkenes such as cyclohexene, and the aromatic solvents such as benzene, toluene and the xylenes. The major requirements in the selection of a solvent are that it be liquid at the reaction temperature, that it does not react with the trialkylaluminium compound or with water or interfere with any subsequent reaction wherein the aluminoxanes are used in polymerization catalysts. The solvents must be oxygen-free. Hydroxyl groups, ether groups, carboxyl groups, keto groups and the like adversely affect preparation of the aluminoxanes.

The aluminoxanes can be produced over a wide range of temperatures, from above the melting point of the solvent to up to the boiling point at the pressure used. Generally, temperatures below about 50 °C are used. Relatively low temperatures can be utilized with the appropriate solvent, say, -100 °C or lower. Pressures are not critical and will typically vary from atmospheric to about 35 bar.

There are numerous types of stirrers or impellers available commercially that can be used to disperse the water in the solvent. The high speed stirring used according to the present invention preferably involves the use of high speed, high shear-inducing impellers operating at greater than 400 revolutions per minute (rpm). The high speed stirring may be carried out in baffled vessels to enhance shear and water dispersion. The amount of water to be dispersed in the organic solvent ranges from just above the limits of solubility of water in the solvent to less than about 5% by weight. A preferred embodiment of the present invention involves dispersing water in a suitable solvent using a high speed, high shear-inducing impeller, and, while maintaining the stirring, adding the first solution of trialkylaluminium compound to the second solution having water dispersed therein. Other variations of the process will occur to one skilled in the art. For example, after the water dispersion has been prepared, the high speed impeller can be shut off and the water dispersion slowly mixed with the trialkylaluminium solution. The key here is to carry out the reaction prior to the breakup of the water dispersion. The dispersion, particularly for low concentrations of water, can be maintained for relatively long periods of time by cooling the dispersion. Satisfactory results have been obtained by cooling the dispersion to dry ice (-78.5 °C) temperatures. The reaction described hereinbefore should be carried out in an inert, e.g., nitrogen or argon atmosphere.

After reaction, the solvent can be stripped and the aluminoxane isolated as a stable white powder. Preferably, however, the aluminoxane is left dissolved in the solvent, which can then be reacted with suitable transition metal compounds to form oligomerization or polymerization catalysts.

In general, the molar ratio of trialkylaluminium compound to water will be about 1:1 although variations of this ratio can occur without adversely affecting the aluminoxane product, for example, the Al/water molar ratio can vary between 0.65:1 to 2:1, preferably 0.75:1 to 1.25:1.

The following Examples further illustrate the invention.


Example 1

The following represents a typical preparation of an aluminoxane at ambient conditions by the process of the instant invention.

The preparation was carried out in a 3-neck 100 ml Morton flask equipped with a high speed stirrer, a nitrogen inlet having a rubber septum for introduction of the trialkylaluminium from a hypodermic syringe and a gas outlet. Toluene (30 ml) was added to the flask and water (4 mmol) was added from a syringe while stirring at 1500 rpm. After 2 min of stirring and while maintaining the stirring, 4 mmol of 25% by weight trimethylaluminium in toluene was injected with a syringe. Stirring was continued for about 2 min.


Example 2

The above procedure was repeated at 50 °C.


Example 3

Part A - Oligomerization catalysts according to the teachings of US patent application Serial No. 896,700, filed on even date were prepared and tested.

To the aluminoxane solutions of Examples 1 and 2, 0.5 mmol of bis(cyclopentadienyl)zirconium dichloride were added with stirring to prepare the catalysts. To the resulting oligomerization catalysts were added 50 ml of 1-hexene. The resultant mixtures were maintained at 40 °C for 2 h before removing samples for gas chromatographic analysis. Conversions of 1-hexene to oligomers are given in Table 1 hereinafter.

## Table 1

| Example | Temperature of preparation of aluminoxanes, °C | Conversion of 1-hexene, % |
|---|---|---|
| 1 | ambient | 80.8 |
| 2 | 50 | 3,7 |

Table 1 shows that the aluminoxanes are preferably prepared at a temperature not higher than 50 °C.

Part B - Example 1 was repeated with the exception that differing amounts of water were used. To the thus prepared aluminoxane solutions were added 0.5 mmol of bis(cyclopentadienyl)zirconium dichloride with stirring to prepare the catalysts. 1-Hexene (400 mmol) was added with stirring to the thus prepared catalyst. The resultant mixtures were maintained at 40 °C for 30 min before removing samples for gas chromatographic analyses. The results are shown in Table 2 hereinafter.

## Table 2

| Water added in aluminoxane preparation, mmol | Al/water molar ratio | Conversion of 1-hexene, % |
|---|---|---|
| 3 | 0.75 | 20.5 |
| 4.8 | 1.2 | 54.4 |
| 6 | 1.5 | 9.6 |

Table 2 shows that the highest conversions of 1-hexene are obtained at a molar ratio Al to water in the range of from 0.75:1 to 1.25:1.

## Part C

Example 1 was repeated with the exception that different stirring speeds were used. Catalysts were prepared and tested for 1-hexene oligomerization as described in Part B hereinbefore. The results are shown in Table 3 hereinafter.

## Table 3

| Stirring Speed, rpm | Conversion of 1-hexene, % |
|---|---|
| 1500 | 36.2 |
| 750 | 30 |
| 500 | 21.2 |
| 250 | 11.9 |

Table 3 shows that preferably a stirring speed higher than 400 rpm is applied.

## Claims

1. A process for the preparation of aluminoxanes which process comprises mixing a first solution of a trialkylaluminium compound in a liquid, dry, inert, hydrocarbon solvent with a second solution of a liquid, inert, hydrocarbon solvent having water dispersed therein by using a high speed, high shear-inducing impeller wherein the trialkylaluminium compound and the water react to produce an aluminoxane.

2. A process as claimed in claim 1 wherein the alkyl groups in the trialkylaluminium compound have in the range of from 1 to 5 carbon atoms.

3. A process as claimed in claim 2 wherein the alkyl groups are methyl or ethyl groups.

4. A process as claimed in any one of the preceding claims wherein a molar ratio of trialkylaluminium compound to water in the range of from 0.65:1 to 2:1 is used.

5. A process as claimed in claim 4 wherein the molar ratio is in the range of from 0.75:1 to 1.25:1.

6. A process as claimed in claim 5 wherein the molar ratio is about 1:1.

7. A process as claimed in any one of the preceding claims which is carried out at a temperature in the range of from -100 °C to +50 °C.

8. A process as claimed in any one of the preceding claims wherein the impeller is operated at a speed greater than 400 revolutions per minute.

9. A process as claimed in any one of the preceding claims wherein the first solution is added to the second solution while maintaining using said impeller.